Europäisches Patentamt

European Patent Office

Office européen des brevets

(11) Veröffentlichungsnummer: **0 261 441**
**A2**

(12) **EUROPÄISCHE PATENTANMELDUNG**

(21) Anmeldenummer: 87112566.2

(22) Anmeldetag: 28.08.87

(51) Int. Cl.⁴: **F16D 69/02**

(30) Priorität: **28.08.86 DE 3629205**

(43) Veröffentlichungstag der Anmeldung:
**30.03.88 Patentblatt 88/13**

(84) Benannte Vertragsstaaten:
**AT DE FR GB IT NL SE**

(71) Anmelder: **FRENZELIT-WERKE GMBH & CO. KG**
**Postfach 1140**
**D-8582 Bad Berneck/Frankenhammer(DE)**

(72) Erfinder: **Schmidt, Ulrich, Dr. Dipl.-Chem.**
**Sterntalerring 116**
**D-8580 Bayreuth(DE)**
Erfinder: **Schnabel, Manfred, Dipl.-Ing. (FH)**
**Weberstrasse 22**
**D-8653 Mainleus(DE)**
Erfinder: **Füssmann, Klaus**
**Seidelsberg 2**
**D-8656 Thurnau(DE)**

(74) Vertreter: **Deufel, Paul et al**
**Patentanwälte Müller-Boré, Deufel, Schön, Hertel Lewald, Otto Isartorplatz 6 Postfach 26 02 47**
**D-8000 München 26(DE)**

(54) **Asbestfreies Armierungsgarn für Reibbeläge.**

(57) Die Erfindung zeigt asbestfreies Armierungsgarn für Reibbeläge mit der Zusammensetzung von Stapelfasermischgarn, bestehend aus 60 bis 90 Gew.-% thermisch stabilen Fasern und 10 bis 40 Gew.-% thermisch instabilem Material, wobei das Armierungsgarn wie übliche Stapelfasergarne weiterverarbeitbar ist und zumindest die thermisch stabile Komponente in Form von Filamenten oder Garn vorliegt, wobei die homogene Verteilung Zusammensetzung des Stapelfasermischgarns erreicht wird, indem die ganz oder teilweise fehlende Komponente des Armierungsgarns statt in Faserform in Form einer Tränkung und/oder eines Überzuges auf den Ausgangsfilamenten oder dem Ausgangsgarn vorliegt. Das Garn wird hergestellt, indem man das zumindest die thermisch stabile Komponente enthaltende Ausgangsmaterial in Form von endlosen Fäden oder Garn mit der thermisch instabilen Komponente und/oder der fehlenden Menge an thermisch stabiler Komponente in Form einer Tränkung und/oder eines Überzuges in an sich bekannter Weise versieht.

## Asbestfreies Armierungsgarn für Reibbeläge

Armierungsgarne für Reibbeläge haben zwei wesentliche Funktionen zu erfüllen, nämlich für Festigkeit auch bei höheren Temperaturen zu sorgen einerseits und die reibtechnischen Eigenschaften zu beeinflussen andererseits.

Aus diesem Grunde wird für solche Reibbelaggarne üblicherweise der Weg gewählt, daß eine Mischung aus thermisch stabilen Fasern mit thermisch instabilen Tragfasern in der Summe der Eigenschaften die Anforderung erfüllt. Im Falle eines Asbestgarnes übernimmt z.B. der Asbest die Funktion der Armierung, d.h. Festigkeitsbildung und Temperaturstabilität, die beigemengte Zellwolle zersetzt sich schon bei niederen Temperaturen gezielt und bildet Reibkohle, die durch den Reibvorgang immer wieder erneuert wird, wenn weitere Zellwolle verkohlt.

Bei asbestfreien Garnen versucht man mit ähnlichen Konstruktionen, z.B. aus Mischungen von Glasfasern und Aramidfasern (beide thermisch stabil) als Festigkeitsträger und Zellwolle (thermisch weniger stabil) ein ähnliches Verhalten zu erreichen. Besonders geeignete Rezepturen für solche Armierungsgarne gehen dabei von ca. 80 % thermisch stabilen Fasern aus, wie z.B. Glasfaser und Aramid oder nur Glasfaser und ca. 20 % thermisch instabilen, sich gezielt zersetzenden Fasern. Ein solches Garn, bestehend aus 80 % Glasfaser und 20 % Synthesefaser kann jedoch nicht nach dem Streichgarn-oder anderen Verfahren als Stapelfasergarn produziert werden, weil der hohe Anteil an Mineralfasern aufgebräuchlichen Anlagen nicht wirtschaftlich verarbeitbar ist.

Über die Technologie des Texturierens bzw. Taslanisierens ist ein solches Mischungsverhältnis erzielbar, jedoch erreicht man keine genügend homogene Durchmischung zwischen thermisch stabilen und Synthesefasern. Auch das Zusammentexturieren mit Preßluft von zwei Komponenten, z.B. Glasfaser und Viskosefilamenten führt nicht zur homogen Verteilung. Dies gilt auch für das Zusammenzwirnen von z.B. Glasfaser und Viskosefilamenten. Je geringer das Metergewicht des Filaments ist und je größer damit die Anzahl an Filamenten, die zum Garn verzwirnt werden, umso homogener ist die Materialverteilung im Garn. Um bei diesem Verfahren eine ausreichend homogene Verteilung der Komponenten erreichen zu können, wäre ein sehr hoher Anteil an hochfeinen, thermisch stabilen und damit sehr teueren Filamenten erforderlich. Anderenfalls könnten die geforderten reibtechnischen Werte nicht erreicht werden. Jedoch würde auch dann nicht die homogene Verteilung von Stapelfasermischgarn erreicht.

Aufgabenstellung ist somit die Bereitstellung eines asbestfreien Garnes, bei dem der Anteil mit hoher Temperaturbeständigkeit und der Anteil mit geringer Temperaturbeständigkeit vollkommen homogen im Garn verteilt sind, so daß die Eigenschaften eines Stapelfasermischgarnes erreicht werden.

Diese Aufgabe wird gelöst, indem bei asbestfreiem Armierungsgarn für Reibbeläge mit der Zusammensetzung von Stapelfasermischgarn, bestehend aus 60 bis 90 Gew.-% thermisch stabilen Fasern und 10 bis 40 Gew.-% thermisch instabilem Material, wobei das Armierungsgarn wie übliche Stapelfasergarne weiterverarbeitbar ist und zumindest die thermisch stabile Komponente in Form von Filamenten oder Garn vorliegt, dadurch die homogene Verteilung und Zusammensetzung von Stapelfasermischgarn erreicht wird, indem die ganz oder teilweise fehlende Komponente des Armierungsgarns statt in Faserform in Form einer Tränkung und/oder eines Überzuges auf den Ausgangsfilamenten oder dem Ausgangsgarn vorliegt.

Als Tränkmaterial kann z.B. das Ausgangsmaterial für Fasern der thermisch instabilen Komponente benutzt werden, also Monomère, ein flüssiges oder gelöstes Harz oder Vorpolymeres oder Polymeres, aber auch nichtfaserbildende Polymere in Form von z.B. Monomern, Vorpolymeren oder Lösungen von Polymeren auf die thermisch stabile Komponente aufgebracht (wenn es sich um Filamente handelt) oder auf-bzw. eingebracht werden, wenn es sich um Garn handelt.

Die Tränkung oder Beschichtung kann in der für Imprägnierungen für Garne üblichen Weise erfolgen, also Durchlaufen des Filaments oder des Garns durch ein Bad unter solchen Bedingungen, daß die gewünschte Menge an Tränk-bzw. Beschichtungsmaterial aus dem Bad aufgenommen wird. Wenn es sich um ein Monomeres handelt, kann anschließend auf dem Garn bzw. Filament polymerisiert oder kondensiert werden, wenn man das beschichtete Garn durch geeignete Stufen, z.B. beheizte Kammern, ggfs. nach Katalysatorzusatz, durchlaufen läßt.

Gemäß einer bevorzugten Ausführungsform läuft der zu beschichtende bzw. zu imprägnierende Filamentstrang oder das Garn durch das normalerweise als Spinnbad verwendete Bad zur Faserherstellung, also z.B. ein viskosegefülltes Bad und wird anschließend im Fällbad als Beschichtung ausgefällt oder im Falle von Monomeren oder Präpolymeren wird die Tränkung und/oder der Überzug anschließend unter den üblichen Polymerisationsbedingungen polymerisiert bzw. kondensiert.

So ist es möglich, ein texturiertes Glasfilament durch das Spinnbad der Viskose-, Acryl-oder Polyesterfaserherstellung laufen zu lassen und anschließend durch das Fällbad oder die Polymerisation und schließlich durch die Trocknung.

Die zweite Komponente kann, allerdings nur in begrenzter Menge, auch in Form von organischen oder anorganischen Füllstoffen zugesetzt werden, insbesondere vermittels Füllstoffdispersionen oder -pasten, die natürlich auch Bindemittel oder die - schon erwähnten Faserausgangsmaterialen enthalten können.

Der Zusatz von anorganischen Füllstoffen kann die Temperaturbeständigkeit erhöhen oder die Reibeigenschaften beeinflussen, z.B. bei Verwendung von Ruß, Graphit, Kaolin oder Metallpulver. Es sei aber nochmals betont, daß die Menge an Füllstoffen, insbesondere anorganischen Füllstoffen, nur gering sein kann, z.B. bis 30 Gew.-% der Beschichtung oder Tränkung, da das Garn sonst seine textiltechnischen Eigenschaften verliert und die Tränkung bzw. der Überzug auch nicht mehr in Garne eindringt oder jedes Filament umhüllt. Die für die bekannte Imprägnierung der Armierungsgarne verwendeten Tränkungspampen, die alle für den Reibbelag oder Kupplungsbelag nötigen Feststoffe enthalten, können hier nicht verwendet werden. Wenn nämlich die fehlende, z.B. thermisch instabile Komponente, in dieser Tränkung verteilt wäre, würde sie gar nicht oder nur zu einem sehr geringen Teil als Überzug auf der z.B. Glasfaser vorliegen, sondern wäre homogen im umgebenden bindemittelhaltigen Füllstoffring verteilt. Zweck der Erfindung ist es aber, ein Armierungsgarn zu liefern, das im Garn thermisch stabile und thermisch instabile Komponenten wie in einem Stapelfasermischgarn homogen verteilt enthält. Diese Mengenbeschränkung gilt aber, wie noch erläutert wird, nicht für Kieselsol oder Wasserglas, die flüssig und somit hier nicht als Füllstoffe zu betrachten sind.

Es muß jeweils so viel an thermisch instabiler Komponente von der anderen Komponente aufgenommen werden, wie dem Verwendungszweck entspricht. Das sind im allgemeinen 10 bis 40, vorzugsweise 10 bis 30 und insbesondere ca. 20 Gew.-% an der thermisch weniger stabilen Komponente, wie dies auf diesem Fachgebiet üblich ist.

Die so erhaltenen Garne werden dann nach Überführung der aufgebrachten Komponente in den Endzustand, z.B. durch Ausfällen, Aushärten und Polymerisieren oder Kondensieren und ggfs. Trocknen ganz normal wie üblich, ggfs. getränkte, Stapelfasergarne weiterverarbeitet. Sie dienen als Ausgangsgarne wie sie z.B. in der Publikation U.Schwartzkopff "Aramidfasern - Eine Lösung der Probleme des Asbestersatzes in Reibbelägen" in ATZ Automobiltechnische Zeitschrift 87 (1985) 3, Seite 133, links oben, im Bild 11a angegeben sind, und enthalten noch keine oder wenig der festen Rohstoffe für die Weiterverarbeitung zum Reibbelag. Diese festen Rohstoffe werden in üblicher Weise nach Mischen. und Dispergieren in Lösungsmittel in der darauffolgenden Imprägnierstufe als Tränkungspampe in das erfindungsgemäße Armierungsgarn eingebracht.

Als Basisgarne seien genannt texturiertes Glasgarn, texturierte Armamid-Filamente oder Basaltfilamente, also alle thermisch stabilen Fasern oder Stapelfasergarne, die Asbest ersetzen können und sich für den beabsichtigten Verwendungszweck eignen. Bei diesen Garnen bzw. Filamenten wird so viel von der thermisch nicht-stabilen Komponente auf-bzw. eingebracht, daß 10 bis 40, insb. 20 % dieser Komponente, bezogen auf Endgarn, nach Trocknen vorliegen.

Das erfindungsgemäße Armierungsgarn bleibt noch tränkfähig trotz des aufgebrachten Überzuges, da bei der erfindungsgemäßen Arbeitsweise die Fasern nach wie vor vereinzelt bleiben, so daß die textilen Eigenschaften des Armierungsgarns erhalten bleiben und die Fasern nicht zu einer dichten, nicht mehr tränkfähigen Masse zusammenkleben.

Bei einer Variante kann auch der Anteil an thermisch stabilem Material erhöht werden, wenn man beispielsweise von einem im Handel erhältlichen Streichgarn aus 50 % Glasfaser, 50 % Acrylfaser/Zellwolle ausgeht, wobei das anorganische Material in flüssiger Form, z.B. Kieselsol oder Wasserglas, auf das Streichgarn auf bzw. eingebracht wird, um den Anteil an thermisch stabiler Komponente auf 70 bis 90 Gew.-%, insb. ca. 80 Gew.-%, zu bringen. Wenn nur geringe Mengen Kieselsäurematerial benötigt werden, genügt es, das Ausgangsfilament oder -garn mit Kieselsol oder Wasserglas zu tränken, z.B. durch ein Bad zu ziehen. Wenn man dem Kieselsol oder Wasserglas etwas Bindemittel zusetzt, entsteht eine bessere Haftung. Relativ großen Mengen Kieselsol werden recht fest an z.B. Glasfasern gebunden, wenn man die Glasfasern vorher einer Säurebehandlung unterzieht, weil sie dann anionisch aufgeladen werden, so daß ein kationisches Kieselsol, wie es z.B. in 30 %iger Konzentration im Handel erhältlich ist, gut aufzieht. Die Durchführung der Säurebehandlung von Glasfasern, um sie anionisch zu machen, ist bekannt.

Verfahrenstechnisch kann das Auf-bzw. Einbringen der zweiten Komponente geschehen durch Tränken, nach dem Ausziehverfahren, durch elektrostatische Aufladung, durch Fixierung mit einem Binder, direkt bei der Herstellung der Basisfaser, wie z.B. der Glasfaser durch sofortiges Aufbringen eines entsprechend dicken Überzuges aus monomeren oder polymerhaltigen Systemen. Es können auch Kombinationen dieser Maßnahmen angewandt werden. Die Arbeitsmethoden selbst, um dies zu bewirken, sind dem Fachmann bekannt.

Die folgenden Beispiele erläutern die Erfindung.

## Beispiel 1

Ein Glasfasergarn aus E-Glas von 1000 tex, texturiert und silangeschlichtet wurde mit einer konzentrierten Lösung von Methylcellulose getränkt, wobei die Durchlaufgeschwindigkeit so eingestellt wurde, daß sich eine Aufnahme von 20 Gew.-% Methylcellulose, bezogen auf trockene Endfaser, ergab.

Dieses Glasfasergarn wurde wie ein Stapelfasergarn als Reibbelaggarn weiterverarbeitet, indem es mit dem in Lösungsmittel dispergierten festen Rohstoffen des Reibbelages imprägniert, vorgetrocknet, gewickelt, getrocknet, gepreßt und in üblicher Weise weiterverarbeitet wurde. Es ergaben sich Reibbeläge mit guten anwendungstechnichen Eigenschaften.

## Beispiel 2

Beispiel 1 wurde wiederholt, wobei jedoch statt Methylcellolse ein Spinnbad aus Acrylmonomeren benutzt wurde, durch das das Glasgarn lief. Anschließend durchlief das Glasgarn eine auf 150°C erhitzte Trockenkammer, wobei die Polymerisation erfolgte (Katalysatorzusatz vor Einlauf in Trockenkammer).

Bei einer Abänderung duchlief das Glasgarn ein Spinnbad aus Polyacrylnitril in DMF und anschließend in das übliche Fällbad und dann in die Trockenkammer.

Das bei beiden Varianten erhaltene Armierungsgarn wurde wie in Beispiel 1 beschrieben mit den in Lösungsmittel dispergierten festen Rohstoffen eines Kupplungsbelages imprägniert und wie in Beispiel 1 beschrieben in üblicher Weise zu einem Kupplungsbelag bearbeitet.

## Beispiel 3

Ein Glasfaser-Aramid-Mischfilament texturiert von 1000 tex x 2, das mersiert war, wurde mit einem Tränkbad aus Wasser, Phenolharzbinder und Kaolin im Gewichtsverhältnis 60% /20 %/ 20 % getränkt und anschließend getrocknet.

## Beispiel 4

Ein Streichgarn von 1000 tex x 2 + Ms aus 50 % Glasfaser/ 50 % Acrylfaser + Zellwolle, wie es im Handel erhältlich ist, wurde getränkt mit Kieselsol, Kaolin, Bindemittel und Wasser im Verhältnis 20 %/ 20 %/ 5 %/ 55 % (als Bindemittel diente Latexdispersion (NBR)). Die Tränkung wurde so durchgeführt, daß sich in der getrockneten Endfaser ein anorganischer Gehalt von 80 % und ein organischer Gehalt von 20 % einstellte.

## Beispiel 5

Ein Aramid/Glasmischfilament wurde im Ausziehverfahren additiv mit einem Melamin-Formaldehydharz ausgerüstet, das in Wasser gelöst war, wobei die Lösung zusätzlich noch einmal 3 % Ruß und ein anderes Mal 15 % Kaolin als Füllstoff enthielt.

## Beispiel 6

Ein Aramidstapelfasergarn wurde mit einer Mischung aus Rieselglasfasern (ca. oder 1 mm Länge) und organischem Binder getränkt, so daß eine Gesamtzusammensetzung von 50 % Aramid,
40 % Glas,
10 % organische Bindebestandteile
entstand.
Nach Trocknung konnte das Stapelfasergarn wie üblich weiterverarbeitet werden.

## Beispiel 7

Ein E-Glasfilamentgarn, texturiert, wurde im Ausziehverfahren mit einer wässrigen Lösung eines kationischen Textilbehandlungsmittels, nämlich Silan der Firma Henkel, behandelt, um die Oberfläche des Glases positiv zu laden.

Anschließend wurde mit einem 10 %igen handelsüblichen NBR-Latex (nichtfaserbildendes Polymeres) behandelt, so daß die Latexpartikel als Film additiv auf die Glasfaser aufzogen.

Dann wurde bei 100°C getrocknet, so daß der Latex nicht vulkanisierte.

Bei einem weiteren Versuch, der im übrigen identisch durchgeführt wurde, wurde der Latex durch Zugabe von Vulkanisationsmitteln und entsprechender Trockentemperatur vulkanisiert.

Beispiel 8

Ein texturiertes Glasfilamentgarn wurde im Ausziehverfahren bei 60°C ca. 15 Minuten mit einem im Handel erhältlichen 30%igen kationischen Kieselsol behandelt. Anschließend wurde kurz mit kaltem Wasser gespült und nach bekanntem Verfahren eine Textilschlichte aufgebracht. Danach wurde bei 130°C getrocknet.

Bei einem weiteren Versuch wurde das Glasfilamentgarn zuerst mit verdünnter Salzsäure (ca. 2 Normal) 10 Minuten behandelt und dann wie oben beschrieben mit dem kationischen Kieselsol behandelt und weiterverarbeitet.

Beispiel 9

Ein E-Glasfilament wurde im durchlaufenden Tränkverfahren im 1. Schritt mit verdünnter Salzsäure (ca. 10 %) leicht gebeizt und dadurch negativ geladen.

In der zweiten Stufe durchlief das gebeizte Glas eine 10%ige Lösung eines handelsüblichen Melaminharzes, das auf die Glasfasern aufzog. Danach wurde bei 100°C getrocknet.

Bei einem weiteren Versuch, der im übrigen identisch durchgeführt wurde, wurde als thermisch instabile Komponente eine 10%ige Lösung eines handelsüblichen Harnstoffharzes benutzt.

Auch die Armierungsgarne der Beispiele 3 bis 9 hatten nach Trocknung noch gute Tränkfähigkeit und konnten wie übliche Stapelfasergarne weiterverarbeitet werden. Sie wurden mit den in Lösungsmittel dispergierten festen Rohstoffen imprägniert und wie in Beispiel 1 beschrieben, in üblicher Weise zu Kupplungsbelägen oder Bremsbelägen weiterverarbeitet.

**Ansprüche**

1. Asbestfreies Armierungsgarn für Reibbeläge, mit der Zusammensetzung von Stapelfasermischgarn, bestehend aus 60 bis 90 Gew.-% thermisch stabilen Fasern und 10 bis 40 Gew.-% thermisch instabilem Material, wobei das Armierungsgarn wie übliche Stapelfasergarne weiterverarbeitbar ist und zumindest die thermisch stabile Komponente in Form von Filamenten oder Garn vorliegt, dadurch gekennzeichnet, daß die homogene Verteilung und Zusammensetzung des Stapelfasermischgarns erreicht wird, indem die ganz oder teilweise fehlende Komponente des Armierungsgarns statt in Faserform in Form einer Tränkung und/oder eines Überzuges auf den Ausgangsfilamenten oder dem Ausgangsgarn vorliegt.

2. Armierungsgarn nach Anspruch 1, dadurch gekennzeichnet, daß die thermisch instabile Komponente in Form eines Ausgangsmaterials für Fasern der thermisch instabilen Komponente oder als nicht faserbildendes Polymeres vorliegt.

3. Armierungsgarn nach Anspruch 1 oder 2, dadurch gekennzeichnet, daß die thermisch instabile Komponente in Form von Monomeren, flüssigem oder gelöstem Harz oder Vorpolymeren oder Polymeren eingesetzt ist, die dann zum Ausgangsmaterial der Fasern der thermisch instabilen Komponente ausgefällt, ausgehärtet, polymerisiert, kondensiert und/oder gegebenenfalls getrocknet sind.

4. Armierungsgarn nach einem der Ansprüche 1 bis 3, dadurch gekennzeichnet, daß die Menge an thermisch stabiler Komponente ca. 80 Gew.-% und die Menge an thermisch instabiler Komponente ca.20 Gew.-% beträgt.

5. Verfahren zur Herstellung der Armierungsgarne nach Anspruch 1 bis 4, dadurch gekennzeichnet, daß man das zumindest die thermisch stabile Komponente enthaltende Ausgangsmaterial in Form von endlosen Fäden oder Garn mit der thermisch instabilen Komponente und/oder der fehlenden Menge an thermisch stabiler Komponente in Form einer Tränkung und/oder eines Überzuges in an sich bekannter Weise versieht.

6. Verfahren nach Anspruch 5, dadurch gekennzeichnet, daß die Filamente oder Garne der thermisch stabilen Komponente durch ein Spinnbad für synthetische oder halbsynthetische Fasern und anschließend durch das Fällbad oder durch eine Vorrichtung zur Polymerisation bzw. Kondensation und ggfs. durch eine Trockenkammer laufen.

7. Verfahren nach Anspruch 5, dadurch gekennzeichnet, daß als thermisch instabile Komponente eine Tränkung und/oder ein Überzug aus einem nichtfaserbildenden Polymeren angewandt wird.

8. Verfahren nach Anspruch 5, dadurch gekennzeichnet, daß zur Erhöhung des Gehalts an thermisch stabiler Komponente auf das mineralfaserhaltige Ausgangsmaterial, gegebenenfalls nach Säurebehandlung, Kieselsol oder Wasserglas aufgezogen wird.